# EUROPEAN PATENT SPECIFICATION

(11) **EP 2 751 463 B1**
(45) Date of publication and mention of the grant of the patent: **12.08.2015**
(21) Application number: 12784032.0
(22) Date of filing: 05.10.2012
(51) Int. Cl.: F01N 13/10, B63H 21/32, F01N 13/14, F01N 13/18, F16L 59/075, F16L 9/18, F16L 41/02

(54) **PIPE STRUCTURE AND EXHAUST SYSTEM**
ROHRSTRUKTUR UND ABGASSYSTEM
ENSEMBLE DE CONDUITS ET SYSTÈME D'ÉCHAPPEMENT

(30) Priority: 13.10.2011 FI 20116018
(43) Date of publication of application: 09.07.2014
(73) Proprietor: Wärtsilä Finland Oy, 65380 Vaasa (FI)
(72) Inventor: LAINE, Jarkko, FI-65100 Vaasa (FI); MÄENPÄÄ, Juho, FI-66450 Jakkula (FI)
(74) Representative: Berggren Oy Ab
(86) International application number: PCT/FI2012/050959
(87) International publication number: WO 2013/053992

(56) References cited:
- EP-A1- 0 072 886
- DE-C- 366 872
- US-A- 3 382 948
- US-A- 4 168 610
- US-A- 5 328 213

## Description

### Technical field of the invention

The present invention relates to a pipe structure for an exhaust system of an internal combustion engine. The invention also concerns an exhaust system.

### Background of the invention

Exhaust ducts with double walls are used in many large internal combustion engines for reducing heat losses from the exhaust system. Heat insulation improves functioning of an SCR system and can be needed in ship engines also for safety purposes. Many prior art exhaust duct constructions comprise an outer pipe and an inner pipe that is arranged inside the outer pipe and attached to it for example by welding. A problem with these conventional constructions is that the inner pipes of the exhaust ducts are difficult to change.

Document US 4168610A discloses the features of the preamble of claim 1.

### Summary of the invention

The invention is defined by the subject-matter of claim 1.

An object of the present invention is to provide an improved pipe structure for an exhaust system of an internal combustion engine. The characterizing features of the pipe structure according to the present invention are given in the characterizing part of claim 1. Another object of the invention is to provide an improved exhaust system for an internal combustion engine.

In a pipe structure according to the invention, the inner pipe can be attached to the outer pipe without welding. The pipe structure is thus easy to assemble and the inner pipe can be easily changed.

The side pipe can be attached to the branch of the outer pipe in the same manner as the inner pipe is attached to the outer pipe. The pipe structure can be part of an exhaust manifold.

According to an embodiment of the invention, the first end and the second end are provided with flanges that extend radially outwards from the outer surface of the outer pipe for attaching the outer pipe to the adjacent parts of the exhaust system.

According to another embodiment of the invention, the radial projection of the outer pipe is the flange at the first end or at the second end of the outer pipe, and the outward projection of the inner pipe is a flange that is arranged at one end of the inner pipe and in contact with the flange of the outer pipe.

According to another embodiment of the invention, the radial projection of the outer pipe is a boss or a group of bosses that extend radially inwards from the inner surface of the outer pipe, and the outward projection of the inner pipe is a bending that is arranged at one end of the inner pipe and in contact with the bosses of the outer pipe.

According to another embodiment of the invention, the space between the outer pipe and the inner pipe is arranged in flow communication with the space inside the inner pipe for equalizing the pressure in the space between the outer pipe and the inner pipe with the pressure inside the inner pipe. According to another embodiment of the invention, the inner pipe is provided with apertures that open into the space between the outer pipe and the inner pipe. When the exhaust gases can flow from the inner pipe into the space between the pipes, the inner pipe does not have to carry the forces caused by the pressure of the exhaust gases. The inner pipe can thus be made of thinner material. According to another embodiment of the invention, the inner pipe is made of a sheet metal. According to another embodiment of the invention, the outer pipe is made of a casting.

The exhaust system according to the invention comprises a pipe structure defined above.

### Brief description of the drawings

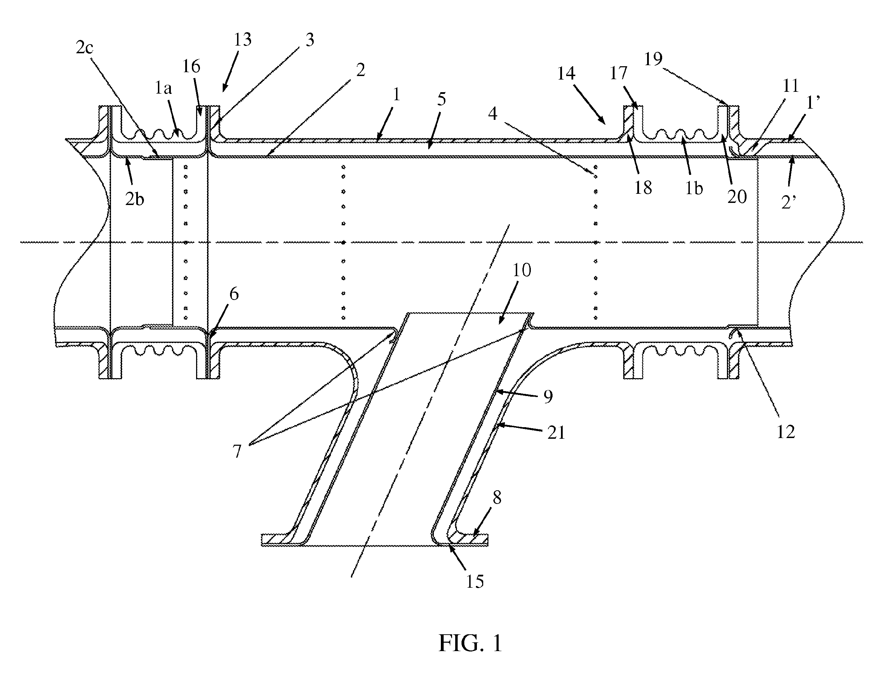

Fig. 1 shows a part of an exhaust duct of an internal combustion engine.

### Detailed description of the invention

Embodiments of the invention are now described in more detail with reference to the accompanying drawing.

In figure 1 is shown part of an exhaust duct of an internal combustion engine. The exhaust duct comprises a pipe structure according to an embodiment of the invention. The engine is a large internal combustion engine, such as an engine that is used as a main or an auxiliary engine of a ship or for producing electricity at a power plant. The engine comprises a plurality of cylinders that can be arranged for instance in line or in a V-configuration. The pipe structure according to the invention comprises an outer pipe 1 and an inner pipe 2. The outer pipe 1 comprises a cylindrical section having a first end 13 and a second end 14. The first end 13 of the outer pipe 1 is on the upstream side in the flow direction of the exhaust gases. The inner pipe 2 is arranged coaxially inside the outer pipe 1. Since the outer diameter of the inner pipe 2 is smaller than the inner diameter of the outer pipe 1, an empty space 5 is formed between the pipes 1, 2. Because the wall of the inner pipe 2 is mostly apart from the wall of the outer pipe 1, only minor heat conduction from the inner pipe 2 to the outer pipe 1 occurs. Reduced heat losses help an SCR system to work more effectively, and lower surface temperature of the exhaust duct also improves safety. For connecting the inner pipe 2 to the outer pipe 1, the inner pipe 2 is provided with at least one outward projection 6, 12 that is engaged with a radial projection 3, 11, 18 of the outer pipe 1.

In the embodiment of the figure, both ends 13, 14 of the outer pipe 1 are provided with flanges 3, 18 for attaching the outer pipe 1 to the adjacent parts of the exhaust system. The parts that are adjacent to the pipe structure can be, for instance, other similar pipe structures, turbochargers, catalytic devices, or heat exchangers. The pipe structure can form, for instance, part of an exhaust manifold, or it can be used for connecting a turbine of a turbocharger to a catalytic converter for selective catalytic reduction. The flanges 3, 18 extend radially outwards from the outer surface of the outer pipe 1. The flange 3 at the first end of the outer pipe 1 is also used as the radial projection for attaching the inner pipe 2 to the outer pipe 1. The first end of the inner pipe 2 is provided with a flange 6 that is arranged in contact with the flange 3 of the outer pipe 1 and forms the outward projection of the inner pipe 2. Since the inner pipe 2 is attached to the outer pipe 1 by means of the projections 3, 6 of the pipes 1, 2, the parts 1, 2 do not need to be joined by welding. The pipe structure can thus be easily assembled and it is also easy to change the inner pipe 2 when needed.

The outer pipe 1 has a rigid construction that can carry the forces created by the pressure of the exhaust gases. The outer pipe 1 can be made, for instance, by casting. A suitable material for the outer pipe 1 is, for instance, steel. The inner pipe 2 can have a less rigid construction, which does not have to stand the pressure of the exhaust gases. The inner pipe 2 can be made for instance of sheet metal. To enable light construction of the inner pipe 2, the space 5 between the outer pipe 1 and the inner pipe 2 is arranged in flow communication with the space inside the inner pipe 2. This arrangement equalizes the pressure in the space 5 between the outer pipe 1 and the inner pipe 2 with the pressure inside the inner pipe 2. In the embodiment of the figure, the flow communication is formed by providing the inner pipe 2 with apertures 4 that are arranged around its perimeter at certain intervals. Through the apertures 4, exhaust gas can flow from the inner pipe 2 into the space 5 between the inner pipe 2 and the outer pipe 1. The number and the positions of the apertures 4 are chosen so that pressure differences between the inner pipe 2 and the space 5 between the inner pipe 2 and the outer pipe 1 are effectively prevented, but the flow in the space 5 between the pipes 1, 2 is minimized. Since the flanges 6 of the inner pipe 2 limit the exhaust gas flow in the space 5 between the inner pipe 2 and the outer pipe 1, heat conduction from the exhaust gases to the outer pipe 1 is minimal despite of the contact between the exhaust gases and the outer pipe 1. Instead of the apertures 4, the flow communication into the space 5 between the inner pipe 1 and the outer pipe 2 could also be arranged through the joint between two adjacent inner pipes 2.

In the embodiment of the figure, the outer pipe 1 further comprises a branch 21 extending outwards from the cylindrical section of the outer pipe 1. The branch 21 is inclined towards the first end 13 of the outer pipe 1. A flange 8 is arranged at the end of the branch 21 for connecting the pipe structure to a cylinder head of an engine. A side pipe 9 having a first end and a second end is arranged coaxially inside the branch 21 of the outer pipe 1. The first end of the side pipe 9 is provided with a flange 15. The flange 15 of the side pipe 9 is in contact with the flange 8 of the branch 21 of the outer pipe 1. The second end of the side pipe 9 is inserted through an opening 10 of the inner pipe 2. The edges 7 of the opening 10 of the inner pipe 2 are bent for allowing easy installation of the side pipe 9. The edges 7 of the opening 10 can be bent either inwards or outwards.

Each end 13, 14 of the outer pipe 1 is connected to a bellows 1a, 1b. The bellows 1a, 1b allow heat expansion of the outer pipe 1. Each of the bellows 1a, 1b is provided with a flange 16, 17 that is arranged against the respective flange 3, 18 of the outer pipe 1. At the first end 13 of the outer pipe 1, the flange 6 of the inner pipe 2 is arranged between the flange 3 of the outer pipe 1 and the flange 16 of the bellows 1b. The inner pipe 2 extends over the whole length of the outer pipe 1 and the bellows 1b at the second end 14 of the outer pipe 1. The bellows 1a at the first end of 13 of the outer pipe 1 is provided with two inner pipe pieces 2b, 2c. The inner pipe pieces 2b, 2c are attached to the flanges of the bellows 1a.

A second pipe structure is arranged downstream from the bellows 1b at the second end 14 of the outer pipe 1. Also the second pipe structure comprises an outer pipe 1' and an inner pipe 2'. The outer pipe 1' of the second pipe structure is provided with a flange 19 for attaching the outer pipe 1' to the bellows 1b. The second pipe structure is similar to the structure described above. However, the outer pipe 1' of the second pipe structure is provided with bosses 11 on the inner surface of the outer pipe 1'. The bosses 11 form the radial projection of the outer pipe 1'. The first end of the inner pipe 2' of the second pipe structure is provided with a bending 12 that is engaged with the bosses 11 of the outer pipe 1' of the second pipe structure. The bending 12 thus works as the outward projection of the inner pipe 2' of the second pipe structure. The second end of the inner pipe 2 overlaps with the first end of the inner pipe 2' of the second pipe structure. Since the parts are not welded together, heat expansion of the parts is allowed. No seals are needed between the inner pipes 2, 2' of the pipe structures, since the exhaust gases are allowed to flow into the space 5 between the inner pipes 2, 2' and the outer pipes 1, 1'.

It will be appreciated by a person skilled in the art that the invention is not limited to the embodiments described above, but may vary within the scope of the appended claims. For instance, it is possible that the flange of an inner pipe is not arranged at the end of the pipe. Instead, a flange can be arranged at a distance from both ends of the pipe. In that case, the inner pipe could extend in both upstream and downstream direction over one or more parts that are adjacent to the outer pipe.

## Claims

1. A pipe structure for an exhaust system of an internal combustion engine, which pipe structure comprises
- an outer pipe (1, 1') comprising a cylindrical section having a first end (13) and a second end (14), and
- an inner pipe (2, 2') that is arranged coaxially inside the outer pipe (1, 1') so that an empty space (5) is formed between the outer pipe (1, 1') and the inner pipe (2, 2'),
the inner pipe (2, 2') comprising an outward projection (6, 12) for engaging the inner pipe (2, 2') with a radial projection (3, 11, 18) of the outer pipe (1, 1'),
the outer pipe (1, 1') comprising a branch (21) extending outwards from the cylindrical section of the outer pipe (1, 1') and having a flange (8) at the end for attaching the pipe structure to a cylinder head of an internal combustion engine,
the pipe structure further comprising a side pipe (9) having a first end and a second end and being arranged coaxially inside the branch (21) of the outer pipe (1, 1'), the first end of the side pipe (9) being provided with a flange (15),
**characterized in that** the flange (15) of the side pipe (9) is in contact with the flange (8) at the end of the branch (21) of the outer pipe (1, 1'), and the second end of the side pipe (9) is inserted through an opening (10) of the inner pipe (2, 2').

2. A pipe structure according to claim 1, **characterized in that** the first end (13) and the second end (14) of the outer pipe (1, 1') are provided with flanges (3, 18) that extend radially outwards from the outer surface of the outer pipe (1, 1') for attaching the outer pipe (1, 1') to the adj acent parts (1b, 1c) of the exhaust system.

3. A pipe structure according to claim 2, **characterized in that** the radial projection (3, 11, 18) of the outer pipe (1, 1') is the flange (3, 18) at the first end (13) or at the second end (14) of the outer pipe (1, 1'), and the outward projection (6, 12) of the inner pipe (2, 2') is a flange (6) that is arranged at one end of the inner pipe (2, 2') and in contact with the flange (3, 18) of the outer pipe (1, 1').

4. A pipe structure according to claim 1 or 2, **characterized in that** the radial projection (3, 11, 18) of the outer pipe (1, 1') is a boss (11) or a group of basses (11) that extend radially inwards from the inner surface of the outer pipe (1, 1'), and the outward projection (6, 12) of the inner pipe (2, 2') is a bending (12) that is arranged at one end of the inner pipe (2, 2') and in contact with the bosses (11) of the outer pipe (1, 1').

5. A pipe structure according to any of claims 1-4, **characterized in that** the space (5) between the outer pipe (1, 1') and the inner pipe (2, 2') is arranged in flow communication with the space inside the inner pipe (2, 2') for equalizing the pressure in the space (5) between the outer pipe (1, 1') and the inner pipe (2, 2') with the pressure inside the inner pipe (2, 2').

6. A pipe structure according to claim 5, **characterized in that** the inner pipe (2, 2') is provided with apertures (4) that open into the space (5) between the outer pipe (1, 1') and the inner pipe (2, 2').

7. A pipe structure according to any of the preceding claims, **characterized in that** the inner pipe (2, 2') is made of a sheet metal.

8. A pipe structure according to any of the preceding claims, **characterized in that** the outer pipe (1, 1') is made of a casting.

9. An exhaust system for an internal combustion engine, **characterized in that** the exhaust system comprises a pipe structure according to any of claims 1-8.

## Patentansprüche

1. Rohrstruktur für ein Abgassystem eines Verbrennungsmotors, wobei die Rohrstruktur umfasst
- ein äußeres Rohr (1, 1'), das einen zylindrischen Abschnitt umfasst, der ein erstes Ende (13) und ein zweites Ende (14) aufweist, und
- ein inneres Rohr (2, 2'), das koaxial innerhalb des äußeren Rohrs angeordnet ist (1, 1'), sodass ein leerer Raum (5) zwischen dem äußeren Rohr (1, 1') und dem inneren Rohr (2, 2') gebildet ist,
wobei das innere Rohr (2, 2') einen Vorsprung nach außen (6, 12) umfasst, um in das innere Rohr (2, 2') mit einem radialen Vorsprung (3, 11, 18) des äußeren Rohrs (1, 1') einzugreifen,
wobei das äußere Rohr (1, 1') einen Abzweig (21) umfasst, der sich vom zylindrischen Abschnitt des äußeren Rohrs (1, 1') nach außen erstreckt und einen Flansch (8) am Ende aufweist, um die Rohrstruktur an einem Zylinderkopf eines Verbrennungsmotors zu befestigen,
wobei die Rohrstruktur weiter ein Seitenrohr (9) umfasst, das ein erstes Ende und ein zweites Ende aufweist und koaxial innerhalb des Abzweigs (21) des äußeren Rohrs (1, 1') angeordnet ist, und das erste Ende des Seitenrohrs (9) mit einem Flansch (15) ausgestattet ist,
**dadurch gekennzeichnet, dass** der Flansch (15) des Seitenrohrs (9) in Kontakt mit dem Flansch (8) am Ende des Abzweigs (21) des äußeren Rohrs (1, 1') ist, und das zweite Ende des Seitenrohrs (9) durch eine Öffnung (10) des inneren Rohrs (2, 2') eingeführt ist.

2. Rohrstruktur nach Anspruch 1, **dadurch gekennzeichnet, dass** das erste Ende (13) und das zweite Ende (14) des äußeren Rohrs (1, 1') mit Flanschen ausgestattet (3, 18) ist, die sich radial von der Außenfläche des äußeren Rohrs (1, 1') nach außen erstrecken, um das äußere Rohr (1, 1') an den angrenzenden Teilen (1b, 1c) des Abgassystems zu befestigen.

3. Rohrstruktur nach Anspruch 2, **dadurch gekennzeichnet, dass** der radiale Vorsprung (3, 11, 18) des äußeren Rohrs (1, 1') der Flansch (3, 18) am ersten Ende (13) oder am zweiten Ende (14) des äußeren Rohrs (1, 1') ist und der Vorsprung nach außen (6, 12) des inneren Rohrs (2, 2') ein Flansch (6) ist, der an einem Ende des inneren Rohrs (2, 2') und in Kontakt mit dem Flansch (3, 18) des äußeren Rohrs (1, 1') angeordnet ist.

4. Rohrstruktur nach Anspruch 1 oder 2, **dadurch gekennzeichnet, dass** der radiale Vorsprung (3, 11, 18) des äußeren Rohrs (1, 1') ein Wulst (11) oder eine Gruppe von Wülsten (11) ist, die sich radial einwärts von der Innenfläche des äußeren Rohrs (1, 1') erstrecken, und der Vorsprung nach außen (6, 12) des inneren Rohrs (2, 2') eine Biegung (12) ist, die an einem Ende des inneren Rohrs (2, 2') und in Kontakt mit den Wülsten (1 1) des äußeren Rohrs (1, 1') angeordnet ist.

5. Rohrstruktur nach irgendeinem der Ansprüche 1 bis 4, **dadurch gekennzeichnet, dass** der Raum (5) zwischen dem äußeren Rohr (1, 1') und dem inneren Rohr (2, 2') in Strömungskommunikation mit dem Raum innerhalb des inneren Rohrs (2, 2') angeordnet ist, um den Druck in dem Raum (S) zwischen dem äußeren Rohr (1, 1') und dem inneren Rohr (2, 2') mit dem Druck innerhalb des inneren Rohrs (2, 2') auszugleichen.

6. Rohrstruktur nach Anspruch 5, **dadurch gekennzeichnet, dass** das innere Rohr (2, 2') mit Öffnungen (4) ausgestattet ist, die in den Raum (5) zwischen dem äußeren Rohr (1, 1') und dem inneren Rohr (2, 2') öffnen.

7. Rohrstruktur nach einem der vorstehenden Ansprüche, **dadurch gekennzeichnet, dass** das innere Rohr (2, 2') aus einem Blech hergestellt ist.

8. Rohrstruktur nach einem der vorstehenden Ansprüche, **dadurch gekennzeichnet, dass** das äußere Rohr (1, 1') aus einem Gussteil hergestellt ist.

9. Abgassystem für einen Verbrennungsmotor, **dadurch gekennzeichnet, dass** das Abgassystem eine Rohrstruktur nach irgendeinem der Ansprüche 1 bis 8 umfasst.

## Revendications

1. Structure de conduits pour un système d'échappement d'un moteur à combustion interne, laquelle structure de conduits comprend :
- un conduit extérieur (1, 1') comprenant une section cylindrique ayant une première extrémité (13) et une seconde extrémité (14), et
- un conduit intérieur (2, 2') disposé coaxialement à l'intérieur du conduit extérieur (1, 1') de manière à ce qu'un espace vide (5) soit formé entre le conduit extérieur (1, 1') et le conduit intérieur (2, 2'),
le conduit intérieur (2, 2') comprenant une projection vers l'extérieur (6, 12) pour la mise en prise avec le conduit intérieur (2, 2') avec une projection radiale (3, 11, 18) du conduit extérieur (1, 1'),
le conduit extérieur (1, 1') comprenant une ramification (21) s'étendant vers l'extérieur par rapport à la section cylindrique du conduit extérieur (1, 1') et ayant une bride (8) à une extrémité pour attacher la structure de conduits à une tête de cylindre d'un moteur à combustion interne,
la structure de conduits comprenant en outre un conduit latéral (9) ayant une première extrémité et une seconde extrémité et disposé coaxialement à l'intérieur de la ramification (21) du conduit extérieur (1, 1'), la première extrémité du conduit latéral (9) étant munie d'une bride (15),
**caractérisée en ce que** la bride (15) du conduit latéral (9) est en contact avec la bride (8) à l'extrémité de la ramification (21) du conduit extérieur (1, 1'), et **en ce que** la seconde extrémité du conduit latéral (9) est insérée à travers une ouverture (10) du conduit intérieur (2, 2').

2. Structure de conduits selon la revendication 1, **caractérisée en ce que** la première extrémité (13) et la seconde extrémité (14) du conduit extérieur (1, 1') sont munies de brides (3, 18) qui s'étendent radialement vers l'extérieur par rapport à la surface extérieure du conduit extérieur (1, 1') pour fixer le conduit extérieur (1, 1') aux organes adjacents (1b, 1c) du système d'échappement.

3. Structure de conduits selon la revendication 2, **caractérisée en ce que** la projection radiale (3, 11, 18) du conduit extérieur (1, 1') est la bride (3, 18) à la première extrémité (13) ou à la seconde extrémité (14) du conduit extérieur (1, 1'), et **en ce que** la projection vers l'extérieur (6, 12) du conduit intérieur (2, 2') est une bride (6) qui est disposée à une extrémité du conduit intérieur (2, 2') et en contact avec la bride (3, 18) du conduit extérieur (1, 1').

4. Structure de conduits selon la revendication 1 ou 2, **caractérisée en ce que** la projection radiale (3, 11, 18) du conduit extérieur (1, 1') est une protubérance (11) ou un groupe de protubérances (11) s'étendant radialement vers l'intérieur à partir de la surface intérieure du conduit extérieur (1, 1'), et **en ce que** la projection vers l'extérieur (6, 12) du conduit intérieur (2, 2') est un cintrage (12) qui est disposé à une extrémité du conduit intérieur (2, 2') et en contact avec les protubérances (11) du conduit extérieur (1, 1').

5. Structure de conduits selon l'une quelconque des revendications 1-4, **caractérisée en ce que** l'espace (5) entre le conduit extérieur (1, 1') et le conduit intérieur (2, 2') est disposé en communication fluidique avec l'espace à l'intérieur du conduit intérieur (2, 2') pour égaliser la pression dans l'espace (5) entre le conduit extérieur (1, 1') et le conduit intérieur (2, 2') avec la pression à l'intérieur du conduit intérieur (2, 2').

6. Structure de conduits selon la revendication 5, **caractérisée en ce que** le conduit intérieur (2, 2') est muni d'ouvertures (4) qui s'ouvrent dans l'espace (5) entre le conduit extérieur (1, 1') et le conduit intérieur (2, 2').

7. Structure de conduits selon l'une quelconque des revendications précédentes, **caractérisée en ce que** le conduit intérieur (2, 2') se compose d'un métal en feuille.

8. Structure de conduits selon l'une quelconque des revendications précédentes, **caractérisée en ce que** le conduit extérieur (1, 1') se compose d'un moulage.

9. Système d'échappement pour un moteur à combustion interne, **caractérisé en ce que** le système d'échappement comprend une structure de conduits selon l'une quelconque des revendications 1-8.
